Europäisches Patentamt

European Patent Office

Office européen des brevets

(19)

(11) Publication number: **0 165 629**
A2

(12) **EUROPEAN PATENT APPLICATION**

(21) Application number: **85200778.0**

(22) Date of filing: **15.05.85**

(51) Int. Cl.⁴: **A 01 C 17/00**
**A 01 C 15/00**

(30) Priority: **21.05.84 NL 8401620**

(43) Date of publication of application:
**27.12.85 Bulletin 85/52**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **Van der Lely, Cornelis**
**7 Brüschenrain**
**Zug(CH)**

(74) Representative: **Mulder, Herman et al,**
**Octrooibureau Van der Lely N.V. Weverskade 10 P.O. Box 26**
**NL-3155 ZG Maasland(NL)**

(54) A spreader.

(57) A spreader has a frame (1) made up of a main frame part (15) and two lateral supports (16, 17), all of which are made from sheet metal and bolted together. The main frame part (15) has a substantially vertical central part (30), a forwardly and upwardly directed upper part (31), and a reaerwardly directed lower part (32). The spreader has fastening members (51,52) which are vertically adjustable to enable the spreader to be transversely tilted to produce an asymmetric spreading pattern suitable for distributing fertilizer uniformly at the edges of fields.

EP 0 165 629 A2

./...

Fig.1

-1-

2605

## A SPREADER

This invention relates to a spreader for spreading material, particularly although not exclusively granular and/or powdery material, comprising a frame and a distribution member, fastening means being provided for connecting the spreader to a carrier such as a tractor.

The object underlying the present invention is to provide a simple spreader.

According to the present invention the major part of the frame comprises a single main frame part made from sheet material. This enables the manufacture of the spreader to be facilitated so that the cost of manufacture can be advantageous.

An advantageous embodiment of a spreader in accordance with the present invention is obtained when the main frame part is a frame part situated centrally in the frame, with a lateral support on each side. This enables the frame to be very simple. It is advantageous when each lateral support comprises an integral side plate. The manufacture of the frame can be advantageously influenced when the main frame part and the lateral supports are assembled together.

An advantageous connection of the various parts of the spreader with the frame can be obtained when, as viewed from aside, the lateral supports have the shape of a U, the limbs of which are directed to the rear.

The upper limbs of the lateral supports can support the sides of the hopper, and a carrier can be supported between the lower limbs for supporting the distribution member. A frame allowing manufacture of large numbers in series production at low cost is obtained when the frame comprises an upper fastening member arranged at the top end of the main frame part, this main frame part consisting of a single, pressed plate extending from the upper fastening member to a position below the distribution member.

The spreader may have a fastening member, at least part of which is movable from one vertical level to another with respect to the frame so that it can be arranged optionally in any one of at least two different positions with respect to the frame. In this way the spreader can be very readily tilted transversely of the direction of travel, for example for uniform distribution on a peripheral strip of a surface to be covered.

An advantageous construction of the spreader may be obtained when the top end of the main frame part is provided with an upper fastening member by which the spreader can be coupled to a top rod of the three-point lifting device of a tractor or like vehicle.

For a better understanding of the present invention and to show how it may be carried into effect, reference will now be made, by way of example, to the accompanying drawings, in which:

Figure 1 is a side elevation of a spreader;

Figure 2 is a front view of the spreader taken in the direction of the arrow II in Figure 1;

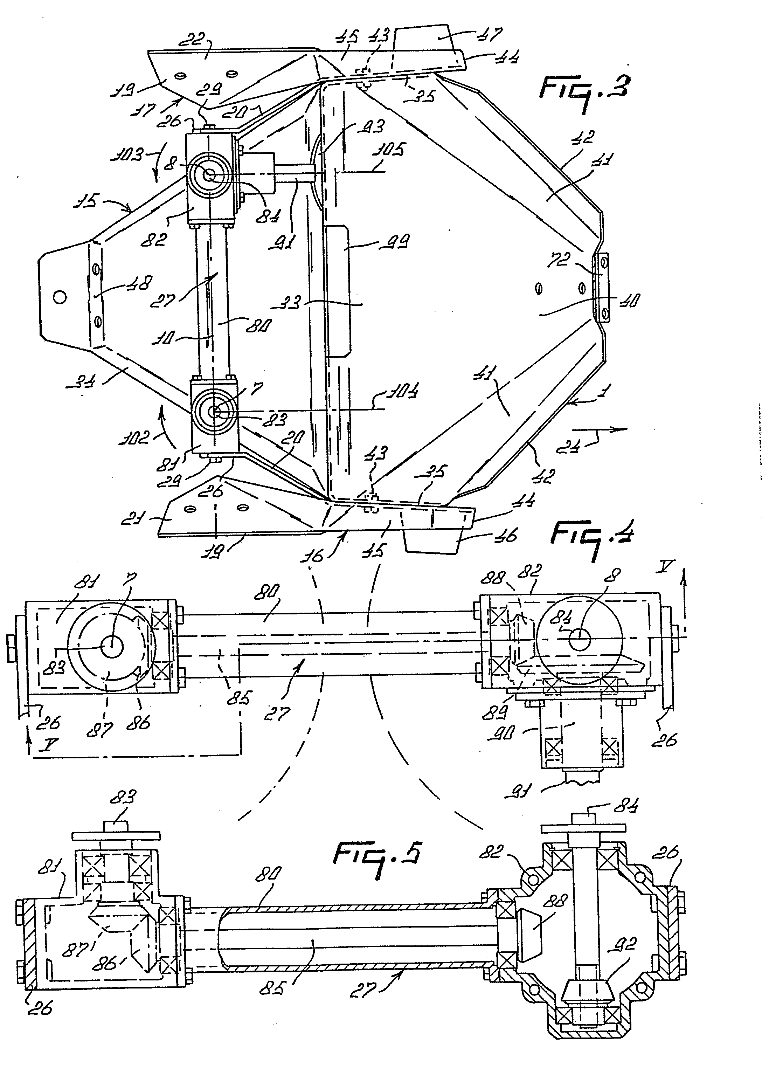

. Figure 3 is a plan view of the spreader with some parts omitted;

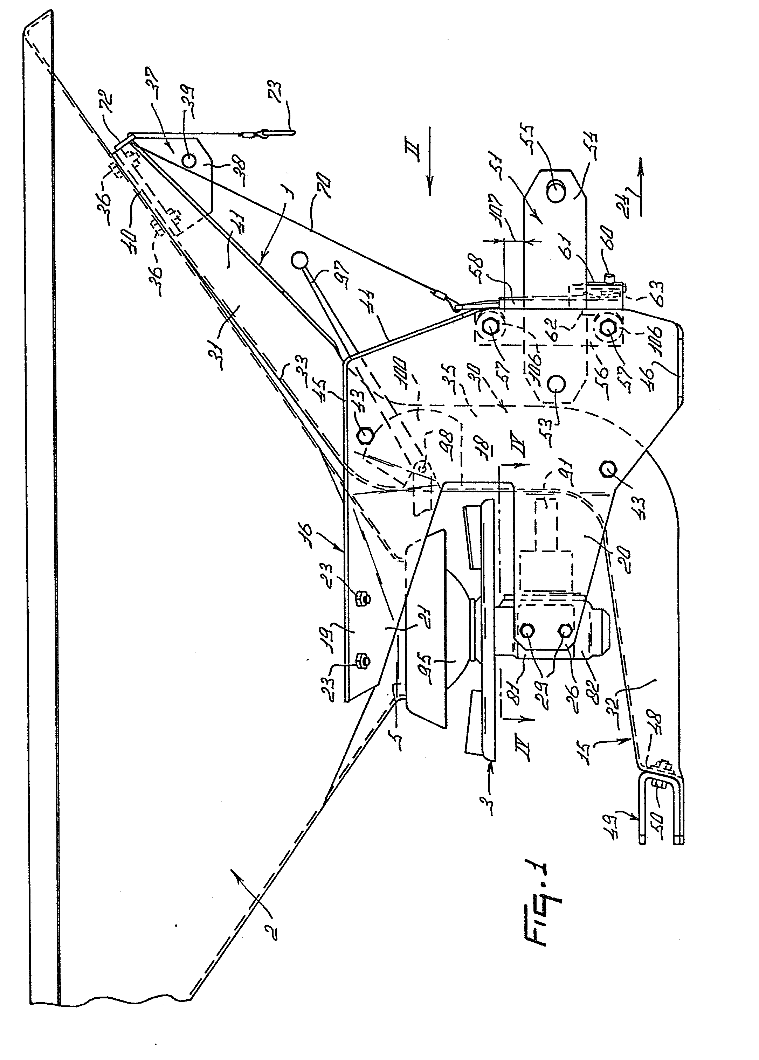

Figure 4 is an enlarged sectional view taken on the line IV-IV in Figure 1;

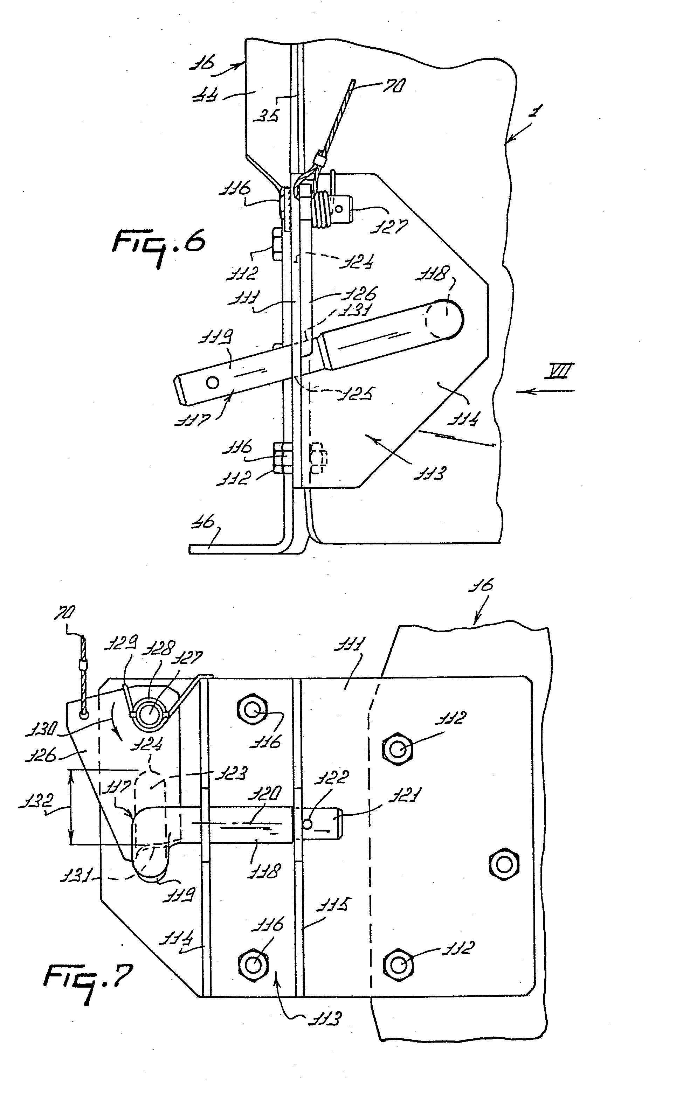

Figure 5 is a sectional view taken on the line V-V in Figure 1;

Figure 6 is a front view of an alternative embodiment of a fastening member of the spreader; and

Figure 7 is a view of the fastening member taken in the direction of the arrow VII in Figure 6.

The spreader shown in the Figures is intended, in particular, for spreading granular and/or powdery material, for example, fertilizer.

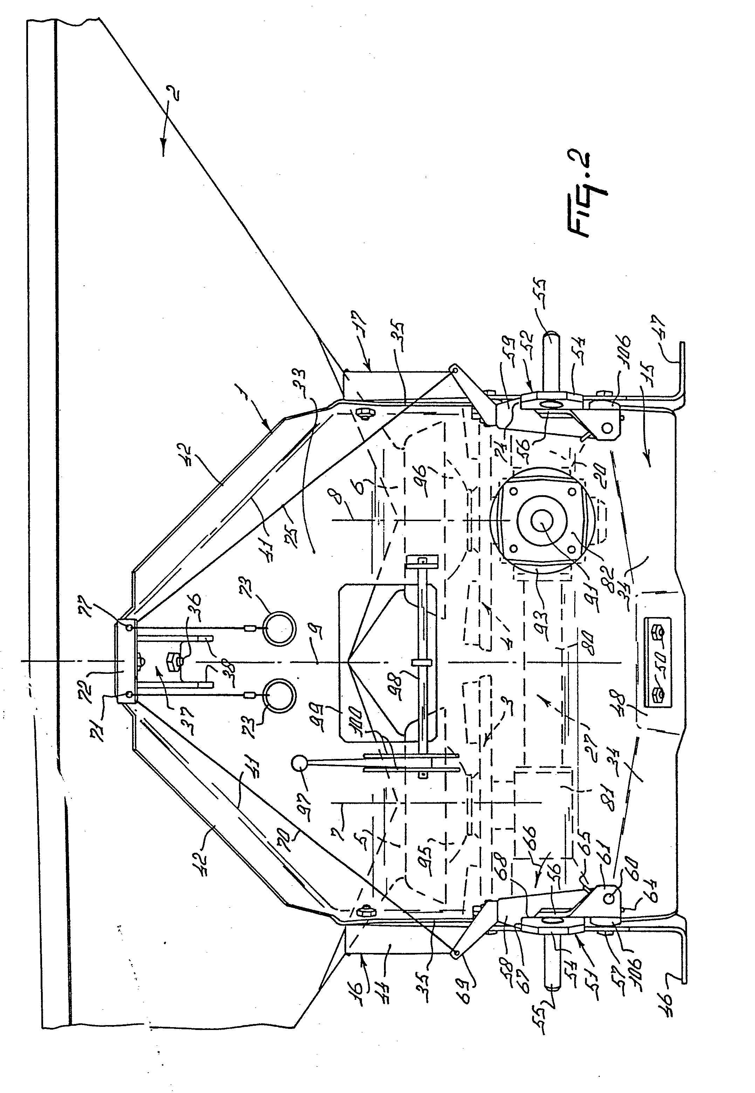

The embodiment shown in Figures 1 to 5 comprises a frame 1 on which a hopper 2 is mounted. The spreader also comprises distribution members 3 and 4 mounted on the frame below delivery spouts 5 and 6 of the hopper 2. The distribution members 3 and 4 are rotatable about upwardly extending rotary axes 7 and 8, which are vertical when the spreader is horizontal. The rotary axes 7 and 8 coincide with the centre lines of the delivery spouts 5 and 6 of the hopper 2.

The spreader is substantially symmetrical with respect to a vertical plane 9 extending in the normal intended direction 24 of operative travel of the spreader. The distribution members 3 and 4 are disposed one on each side of the plane 9. The rotary axes 7 and 8 of the distribution members lie in a plane 10 which is at right angles to the plane 9. The distribution members 3 and 4 are substantially identical to each other and are at the same height as each other when the spreader is horizontal. The hopper 2, which may be pressed from a single piece of material, is rectangular as viewed on plan, and the delivery spouts 5 and 6 are circular, as viewed on plan. They are concentric with the centre lines 7 and 8, although this is not shown in detail in the drawings.

The frame comprises a main frame part 15, on both sides of which upwardly extending lateral supports 16 and 17 are arranged. Each of the lateral supports 16 and 17 comprises a plate which is generally U-shaped, as viewed from the side, having a web 18, an upper limb 19 and a lower limb 20. The limbs 19 and 20 extend rearwardly from the web 18 with respect to the direction 24, and the limb 19 lies above the limb 20. The rear ends of the upper limbs 19 of the lateral supports 16 and 17 are shaped so that they diverge upwardly and constitute supports 21 and 22, on which bear the sides of the hopper 2, which are fastened to the supports 21 and 22 by bolts 23. The lower limbs 20 of the two lateral supports 16 and 17 are directed obliquely towards each other (Figure 3) and have mutually parallel fastening lugs 26. These lugs 26 are connected by bolts 29 to the opposite ends of a carrier formed by a transmission casing 27.

The main frame part 15 is an integral one-piece unit pressed from a single sheet. As shown in the side view of Figure 1, the main frame part 15 has a middle part 30 which extends upwardly and is vertical when the spreader is horizontal. The frame part 15 has an upper part 31 which slopes upwardly and forwardly from the top of the middle part 30, with respect to the direction 24. The main frame part 15 also has a lower part 32 extending to the rear from the underside of the middle part 30, below the distribution members 3 and 4. When viewed on plan, the middle part 30 is widest, measured transversely of the direction 24, the upper part 31 becoming narrower towards the front and the lower part 32 becoming narrower towards the rear. The parts 31 and 32 are generally triangular as viewed on plan, the sides converging to the front and to the rear respectively. From the front, the middle part 30 appears substantially rectangular. The main frame part 15 has a substantially flat central sheet part 33 extending over the parts 30, 31 and 32. Over the lower part 32 the edge regions of the central part 33 are bent down to form downwardly bent-over parts 34 which are flared outwardly in the downward direction. The middle part 30 has forwardly bent-over edge regions 35. The central part 33 is slightly bent at the top of the upper part 31 with respect to the rest of it so that the upper end portion 40 lies flat on the front of the hopper 2 where it is fastened by bolts 36. On its underside, the top end portion 40 is provided with a U-shaped fastening member 37 having limbs 38 which are provided with aligned holes 39. The upper part 31 has downwardly directed edge regions 41, which like the edge regions 35, are substantially perpendicualr to the central part 33. The lower edges of the edge regions 41 are bent away from each other from the regions 41 and constitute stiffening flanges 42.

The lateral supports 16 and 17 are each fastened by only two bolts 43 to a respective edge region of the main frame part 15. One bolt 43 is situated near the top edge of each lateral support, and the other bolt is situated near the place where the lower limb 20 meets the middle part 18 near the underside of the lateral support.

The lateral supports 16 and 17 are each provided along the upper portion of their front edge with supporting flanges 44 directed away from each other and meeting supporting flanges 45 which are provided at the top edges of the plates and are also directed away from each other. These flanges 45 adjoin the supports 21 and 22 respectively of the upper limbs 19 of the side plates. Near the underside, the lateral supports 16 and 17 have outwardly directed lugs 46 and 47 which serve as supporting feet for the spreader.

The rear end of the lower part 32 of the main frame part 15 is provided with a downwardly bent-over panel 48, which adjoins the parts 34. The panel 48 is provided with a drawhook constituted by a U-shaped bracket 49 which is secured in the panel 48 by bolts 50. The lower limb of the bracket 49 constitutes a third supporting foot for supporting the spreader on the ground.

Fastening members 51 and 52 are provided near the front of the supports on their inboard sides. These fastening members 51 and 52 have coupling arms 54 in the form of strips, which lie parallel to the lateral supports 16 and 17. Each fastening member 51 and 52 is movably connected by a respective pivotal shaft 53 to its lateral support, these pivotal shafts being aligned with each other. The coupling arms 54 project forwardly from the pivotal shafts 53 to a position ahead of the front edges of the lateral supports. Near their front ends, the fastening members 51 and 52 have coupling pins 55, which are substantially aligned with each other and which are disposed, as viewed from the side, below the holes 39 in the coupling member 37. The pins 55 extend to opposite sides from the coupling arms 54.

Detents 58 and 59 are provided near the front of each lateral support 16 and 17, at the level of the fastening members 51 and 52. These detents are situated on the inboard sides of the lateral supports 16 and 17. Like the fastening members 51 and 52, the detents 58 and 59 are disposed symmetrically with respect to each other about the plane 9. Consequently, the construction of the detent 58 only will be described in detail; corresponding parts of the two detents are designated by the same reference numerals. The detents 58 and 59 comprise locking arms in the form of plates, which are pivotable about pivotal pins 60. Each pivotal pin 60 is journalled in a bent-over lug 61 of a guide strip 56 and a suppporting lug 62 fastened to the strip 56. The pivotal pin 60 is surrounded by a spring 63, one arm 64 of which engages below the lug 61, and the other arm 65 of which contacts the locking arm 58. The spring 65 exerts a force on the detent 58 in the direction of the arrow 66. The detent 58 has an abutment 67 and a supporting face 68. A draw-arm 69 is provided at the top of the detent 58, a flexible control member in the form of a draw cord 70 being fastened to the draw-arm 69. The cord 70 is guided through an opening 71 in a lug 72 on the top of the upper part 31 of the main frame part 15. The cord 70 has a ring-pull 73.

The detent 59 is provided with an abutment 74 corresponding to the abutment 67. The detent 59 is connected to a cord 75 passed through another opening in the lug 72. The guide strip 56 is fixed by bolts 57 in a position spaced from the inner side of the lateral support 16. The arm 51 extends between the respective lateral support and the strip 56 so as to be guided between the support and the strip.

The transmission casing 27 serves as a carrying member for the distribution members 3 and 4. The transmission casing 27 comprises a middle part 80 and gear boxes 81 and 82 arranged at the ends of the middle part. Shafts 83, journalled in the gear boxes 81 and 82, project upwards from the gear boxes. The distribution members 3 and 4 are fastened to the parts of the shafts 83 and 84 projecting above the gear boxes 81 and 82. When the spreader is horizontal, the shafts 83 and 84 are vertical. Their centre lines coincide with the rotary axes 7 and 8. The middle part 809 accommodates an auxiliary shaft 85 which is provided, in the gear box 81, with a gear wheel 86 which meshes with a gear wheel 87 on the shaft 83. The auxiliary shaft 85 is provided at the end inside the gear box 82 with a gear wheel 88 which meshes with a gear wheel 89 on a drive input shaft 90. The input shaft 90 has a coupling end 91. A bevel gear wheel 92 in the gear box 82 is fastened to the shaft 84. The two gear wheels 88 and 92 mesh with the gear wheel 89. The gear wheels 86 and 87 have equal numbers of teeth corresponding with the equal numbers of teeth of the gear wheels 88 and 92. The gear wheel 89 has a number of teeth differing from that of the other gear wheels. The number of teeth of the gear wheel 89 is higher than that of the other gear wheels.

The middle part 33 of the main frame part 15 has an opening 93 which in the illustrated embodiment, is circular with its centre line coinciding with the centreline of the input shaft 90. The front end of the coupling end 91 of the shaft 90 is situated near the opening 93.

Dosing members 95 and 96 are provided between the lower ends of the delivery spouts 5 and 6 and the respective distribution members 3 and 4. The top ends of the dosing members 95 and 96 enclose the lower ends of the delivery spouts, and their lower ends adjoin the distribution members 3 and 4. The dosing members 95 and 96 have outlet ports (not shown in detail) which can be closed to a greater or lesser extent by closing members. These closing members are connected in a manner not shown to an adjusting arm 97. The adjusting arm 97 is situated in front of the middle part 30 and is arranged on an adjusting shaft 98 provided in front of the central part 33 in the middle part 30. The adjusting shaft 98 is situated near an opening 99 in the middle part 30 of the main frame part 15. Rods (not shown) connected with the closing plates extend through the opening 99 and are connected to the adjusting shaft 98. The adjusting arm 97 is guided between guide plates 100, which may be provided with indicating means in a manner not shown. These indicating means, if provided, display the extent of opening of the outlet ports by the closing members on account of the position of the adjusting arm 97 with respect to the guide plates 100.

For use, the spreader is coupled to the three-point lifting device of a carrier, for example a tractor. For this purpose the spreader has three fastening members constituted by the U-shaped member 37 and the fastening members 51 and 52. The top rod of the three-point lifting device can be connected to the upper fastening member 37 by a pin passed through the holes 39. The lower arms of the three-point lifting device can be connected by the pins 55 to the fastening members 51 and 52. An auxiliary shaft is connected between the power take-off shaft of the tractor and the coupling end 91 of the input shaft 90. This auxiliary shaft is coupled by a universal joint to the coupling end 91. The end 91 is disposed sufficiently close to the opening 93 for the universal joint to be situated in front of the central part 33 of the main frame part. Thus, when the spreader is moved upwardly or downwardly with respect to the tractor by the lifting device, the coupling of the connecting shaft to the shaft 90 will not be adversely affected by the substantially closed main frame part 15, behind which the distribution members 3 and 4 are provided.

During operation the shafts 83 and 84 are rotated, via the shaft 91 and the gear wheel transmissions in the casing 27, in the directions of the arrows 102 and 103 (Figure 3). The distribution members rigidly fastened to the shafts 83 and 84 are thus rotated in the same directions 102 and 103 so that the points of closest approach of the distribution members move in the direction 24. During operation material is fed from the hopper 2 through the delivery spouts 5 and 6 to the distribution members 3 and 4. The rate of flow of material from the hopper to the distribution members can be controlled by covering the ports of the dosing members 95 and 96 to a greater or lesser extent by means of the closing members. The form and the speed of rotation of the distribution members and the location of the outlet ports of the dosing members are chosen so that, during travel of the spreader, each of the distribution members ejects the material over the same strip of land. During normal operation in which the rotary axes 7 and 8 of the distributiion members lie in planes 104, 105 parallel to the direction 24 and at right angles to the surface to be covered, this strip extends over the same distance to both sides of the spreader. Each of the distribution members spreads the material symmetrically with respect to the plane 9. During travel, the strip covered with material by the distribution member 3 coincides with the strip covered by the distribution member 4. The spreader is thus particularly suitable for spreading granular or powdery material, for example seeds or fertilizer, on the field during travel across the field.

During normal operation of the spreader, the material is spread in a distribution pattern in which the area density of the material gradually decreases towards the edges of the spreading width. During the next run, the spreading width of the next run will at least partly overlap the spreading width of the preceding run so that, in total, a uniform distribution of the material per unit of surface is obtained. However, when covering a peripheral strip of a surface to be covered, the material spread over the peripheral strip cannot be supplemented during a subsequent run. In order to obtain nevertheless a uniform distribution pattern over the peripheral strip so that the amount supplied per unit area from the device to the peripheral strip remains the same and the density of material does not decrease towards the edge of the peripheral strip, the spreader can be tilted. This tilting results in the distributiion members 3 and 4 being directed obliquely downwards towards the side of the peripheral strip. For this purpose the spreader can be lowered slightly on the side towards which the distribution members are to be directed obliquely downwards. This can be done by moving the fastening members 51 or 52 slightly upwards, relatively to the frame, on the side towards which the distribution members are to slope downwards. Thus the pin 55 moves higher in the frame so that, with the lower lifting arms at the same height, the spreader is tilted with respect to the tractor and hence to the surface to be covered, compared with the position in which the spreader is parallel to the surface to be covered.

In order to obtain this tilted setting, the spreader is lowered by means of the lifting device until it rests on the ground by the foot supports 46 and 47 and the rear support 49. Then, for example, the detent 58 can be withdrawn by means of the cord 70 so that it moves about the pivotal pin 60 against the direction of the arrow 66. This movement is performed against the force of the spring 63. When subsequently the spreader is lifted by means of the lifting device, with the cord 70 kept under tension so that the abutment 67 remains out of the way of the top of the arm 51, the fastening member 51 will move about the pivotal shaft 53 with respect to the frame. This pivotal movement continues until the top of the arm 54 of the fastening member 51 comes into contact with a stop 106. This stop 106 is constituted by a spacer sleeve surrounding the bolt 57 between the lateral support 16 and the guide strip 56. Meanwhile, the fastening member 52 is retained in the position shown in the Figures by its detent 59. The side of the spreader having the fastening member 51 will, owing to the higher position of the pin 54 in the frame be lower than the side having the fastening member 52. Thus the spreader as a whole, and thus the distribution members 3 and 4, will be inclined downwards towards the side where the lateral plate 16 is provided. This is to the right, as viewed in the direction 24. During travel the spreader can spread the material in a direction inclined to the right. The material is then spread to the right over a smaller distance than it is to the other side. The amount of material spread to the right is, however, equal to the amount of material spread to the other side. The amount of material spread to the right is not changed by tilting the spreader. Therefore, from the spreader to the edge of the peripheral strip, the material is uniformly distributed per unit of area.

During normal operation, when the distribution members are not inclined transversely of the spreader, the distribution pattern is such that the area density of material gradually decreases from the spreader to the outer edge of the width on each side. With this design of the spreader, the tilted setting is selected for covering a peripheral strip so that the distance of spreading on one side is only half the distance of spreading in normal operation on said side. Thus the same amount of material is spread over half the normal width. Since the distribution over this width is uniform, the distribution pattern will be uniform up to the edge of the peripheral strip.

It will be obvious that the material will be spread obliquely downwards on the left-hand side, as viewed in the direction 24, if the fastening member 51 is held in the position shown in Figures 1 to 5 and the fastening member 52 is turned upwards about the pivotal shaft 53 so that it is higher in the frame than is indicated in the Figures.

The spreader described above has a simple construction in which the detent 58 or 59 can be simply withdrawn by hand by means of the cord 70 or 75. This cord, forming a flexible control member for the detent 58 or 59 can be readily actuated from the tractor or other vehicle to which the spreader is hitched.

When the spreader is to be returned to its normal position from the tilted position, so that the pins 55 of the two fastening members are at the same level as each other in the frame, the spreader is again lowered to the ground by means of the lifting device. The lifting arms of the lifting device have to be lowered sufficiently far for the upturned fastening member 51 or 52 to moves downwards with respect to the frame until the respective abutment 67 or 74 can again engage above the top of the arm 54 under the action of the spring arm 65. Thus a very simple construction is obtained for tilting the spreader for covering a peripheral strip of the surface to be covered. It has been found that the width of spread and the distribution of the material on the side opposite the side to which the spreader slopes downwards remain substantially the same. Although the tilting mechanism can, in principle, be used in different kinds of spreaders, it is particularly successful in a spreader in which two distribution members spread the material on one and the same strip as in the case of the spreader described above.

The mechanism described above provides a simple means for tilting the spreader and returning it to normal operation. The extent of tilting transversely of the direction 24 can be closen by selecting the desired value of the vertical distance 107 between the lug 67 and the stop 106. Tilting may vary preferably from angles of about $5^{\circ}$ to less than $20^{\circ}$. In the

illustrated embodiment the tilt angle is about 5°.

When unhitched from the tractor, the spacer sleeves corresponding to the stop 106 but surrounding the lower pins 57 constitute stops preventing the arm 54 from sinking down too far.

The design of the frame of the spreader illustrated herein provides a very simple frame structure. This frame structure mainly comprises three parts 15, 16, 17. Each of these parts can be made simply from a single plate having a thickness of, for example, 4 mm. Preferably the plate will not be thinner than 2 mm or thicker than 6 mm. These parts can be simply joined to one another by means of the bolts 43 so that, after the manufacture of the parts 15, 16 and 17, assembly of the frame is a very simple operation. The gear box 27, which is made separately from the frame, can be very simply mounted in the frame by fixing it by means of the bolts 29 to the lateral supports 16 and 17. The gear casing 17 can be fully prefabricated independently of the frame formed by the parts 15, 16 and 17. During the prefabrication of the gear casing, before it is fastened in the frame, the distribution members 3 and 4 may be mounted on it, if desired. The hopper 2 can be very simply fastened to the frame by means of the bolts 23 and 36. The dosing members 95 and 96 can be very simply arranged between the hopper and the distribution members when the hopper is being mounted. The substantially closed, main frame part 15 in the form of a plate constitutes a satisfactory screen between the distribution members ejecting the material and the tractor or other vehicle to which the spreader is hitched. The simple construction of the frame and the simple mode of fastening of the gear casing 57 and the hopper 2 can also be used for a spreader that has no provision for tilting. Then, for example, the fastening members 51 and 52 can be rigidly fastened to the lateral supports 16 and 17. Such fastening members 51 and 52 may also be integral with the lateral supports 16 and 17 by making them, with the members 51 and 52 from a single sheet.

The frame of the spreader as described can be made in large series at low cost.

Figures 1 to 5 show that the fastening members 51 and 52 are adjustable with respect to the frame about pivotal shafts 53 extending horizontally and transversely of the direction 24. The shafts 53 are at right angles to the direction 24.

Figures 6 and 7 show a different embodiment of fastening members provided on the spreader for connecting the spreader to the lower lifting arms of the three-point lifting device of a tractor or a similar vehicle.

Figures 6 and 7 show only one fastening member which is secured to the lateral support 16 in place of the fastening member 51. The fastening member 52 corresponding with the fastening member 51 is replaced by a fastening member similar to, but a mirror-image of, that of Figures 6 and 7.

In this embodiment the inboard side of the lateral support 16 is provided with a carrying support 111 in the form of a plate. The support 111 is secured to the support 16 by bolts 112. A U-shaped carrier 113 is fastened by bolts 116 to the inner side of the carrying support 111. The carrier 113 has limbs 114 and 115 in which is rotatably journalled an arm 118 of a fastening member 117. The fastening member 117 comprises an arm 119 extending at right angles to the arm 118. The arm 118 is parallel to the normal intended direction of operative travel of the spreader and its centreline forms a pivotal axis for the fastening member 117. The arm 118 has a reduced diameter end 121 which is fixed by a pin 122 against displacement in the limbs 114 and 115. The arm 119 extends through a slot 123 in the carrying support 111. The slot 123 has a top end 124 and a lower end 125, which serve as stops for limiting movement of the arm 119 about the shaft 120.

The inner side of the carrying support 111 is provided with a detent 126, which is pivotable about a pivotal shaft 127 secured to the carrying support 111. The shaft 127 is surrounded by a spring 128, one end 129 of which engages the detent 126 and exerts a force in the direction of an arrow 130 on the detent around the pivotal shaft 127. On the underside the detent 126 is provided with an abutment 131, which can engage the top of the arm 119.

When the spreader is put into use, it is coupled to the lifting device in the same manner as indicated for the preceding embodiment. Instead of using the pins 55, the ends of the arms 119 of the fastening members 117 secured to the lateral supports 16 and 17 are connected to the lower arms of the lifting device of the tractor. In the position of the arms 119 shown in Figures 6 and 7, the spreader will not be inclined transversely with respect to the tractor. The spreader can be tilted by moving upwards the arm 119 of the appropriate one of the fastening members with respect to the frame in the manner described for the preceding embodiment, in which at will one of the pins 55 can be moved upwards with respect to the frame after withdrawal of the detent 58 or 59. In this second embodiment the detent 126 with the stop 131 can be withdrawn from the top of the arm 119 by drawing the cord 70. This can be done when the spreader is standing on the ground and the arm 119 is not forced against the abutment 131 by the weight of the spreader. After withdrawal of the detent, the arms 119 connected with the lower lifting arms will move upwards when the lower arms of the lifting device of the tractor are lifted. The arm 119, from the top of which is withdrawn the abutment 131, will thus move upwards about the pivotal shaft 120 with respect to the frame 1. On the other side of the spreader the other arm 119 will lift the frame with it so that the spreader tilts transversely into an inclined position behind the tractor. The angle of the inclined position depends on the extent to which the arm 119 can turn about the pivotal shaft 120. In this embodiment the arm 119 can turn about the pivotal shaft 120 until the top of the arm 119 contacts the stop 124 formed by the top end of the slot 123. After the arm 119 has contacted the stop 124, further lifting of the arm 119 by the lower arms of the lifting device of the tractor will cause the spreader to rise in the inclined position determined by the position of the arm 119 with respect to the tractor. The spreader can then be raised in the tilted position to a desired height above the ground for spreading the material by means of the distribution members 3 and 4.

The arm 119 can be returned to the position shown in Figure 6 and 7 by lowering the spreader until it is again supported on the ground by the supporting lugs 46 and 47 and the bracket 49. Under the action of the spring 128, the detent 126 returns to the position shown in Figure 7. The abutment 131 of the detent will then lie above the top of the arm 119 so that the arm 119 is prevented from turning upwards about the shaft 120. In this position the bottom of the arm 119 engages the stop 125 so that the arm 119 is fixed in the position shown in Figures 6 and 7.

It will be obvious that, in the same manner as described for the preceding embodiment, the construction of Figures 6 and 7 can be used for uniformly spreading the material over a peripheral strip on the left-hand or the right-hand side of the spreader. In this embodiment, the angle of tilting can be determined by choosing the magnitude of the distance 132 between the stop 124 and the abutment 131 as shown in the position of Figure 7. This distance determines the possible upwards angular turn of the arm 117 about the pivotal shaft 120. Preferably the spreader can be tilted at an angle of about 5° to 20° at the most with respect to the surface to be covered. Usually an angle of about 7 to 10° is sufficient to spread material uniformly over a peripheral strip having a width at the side of the tractor equal to about half the distance over which the material can be spread in normal operation.

Whilst various features of the spreaders that have been described, and that are illustrated in the drawings, will be set forth in the following claims as inventive features, it is to be noted that the invention is not necessarily limited to these features and that it encompasses all of the features that have been described both individually and in various combinations.

0165629

- 19 -

<u>CLAIMS</u>

1. A spreader comprising a frame (1) and a distribution member (3, 4), means (37, 51, 52) being provided for connecting the spreader to a carrier, characterized in that the major part of the frame (21) consists of a single main frame part (15) made from sheet material.

2. A spreader as claimed in claim 1, characterized in that the main frame part (15) is disposed centrally in the frame (1), a lateral support (16, 17) being provided on each side of the main frame part (15).

3. A spreader as claimed in claim 2, characterized in that, as viewed from the side, the lateral supports (16, 17) each have generally the shape of a U, comprising limbs (19, 20) which are directed to the rear, the rear ends of the upper limbs (19) of the lateral supports (16, 17) are connected to the sides of the hopper (2) and the lower limbs (20) of the lateral supports (16, 17) are connected to a carrier (27) extending between the lower limbs (20), which carrier (27) is provided with the distribution member (3, 4).

4. A spreader as claimed in any one of the preceding claims, characterized in that the main frame part (15) extends across substantially the whole width of the frame (1) and extends from the upper part of the frame to the rear, whereby, as viewed from the side with the spreader horizontal, the main frame part (15) has an upwardly extending middle part (30) having at the top an upper part (31) extending upwardly and forwardly inclined towards the front with respect to the normal intended direction (24) of operative travel of the spreader, the main frame part (15) also having at its lower region a rearwardly extending lower part (32).

- 20 -    0165629

5. A spreader as claimed in any one of the preceding claims, characterized in that two distribution members (3, 4) are mounted on shafts journalled in a carrier (27) comprising a hollow casing (80, 81, 82) in which transmission members (85-89) are accommodated for driving the distribution members (3, 4), the shafts (83, 84) being interconnected by transmission members (85-89, 92) coupled with an input shaft (90) having a coupling end (91) projecting from the casing (80, 81, 82).

6. A spreader as claimed in any one of the preceding claims, characterized in that, with respect to the normal intended direction (24) of operative travel, the or each distribution member (3, 4) is disposed behind the middle part (30) of the main frame part (15).

7. A spreader as claimed in any one of the preceding claims, characterized in that the hopper (2) has two delivery spouts (5, 6) communicating with respective distribution members (3, 4), the distribution members (3, 4) each adjoining a respective one of dosing members (95, 96) for regulating the flow rate of material from the hopper (2) to the distribution member(s) (3, 4), an adjusting mechanism (97, 98) being provided, with respect to the normal intended direction (24) of operative travel, on the front of the main frame part (15) and being connected through an opening (99) in the main frame part (15) with the dosing members (95, 96).

8. A spreader as claimed in claim 2 or in any one of claims 3 to 7 when appendant to claim 2, characterized in that a fastening member (51, 52; 117) is provided on each lateral support (16, 17) for coupling the spreader to lifting arms of a tractor or like implement, at least one fastening member (51, 52; 117) being movable with respect to the frame (1) and being fixable at will in any one of at least two positions relative to the frame (1).

9. A spreader as claimed in any one of the preceding claims, characterized in that the top end of the main frame part (15) is provided with an upper fastening member (37) by which the spreader can be coupled to a top rod of the three-point lifting device of a tractor or like vehicle.

10. A spreader as claimed in claim 8 or claims 8 and 9, characterized in that the fastening member (51, 52; 117) is pivotally mounted on a lateral support (16, 17) and is movable between two stops (67, 74, 106; 131, 124), one (106; 124) of which is fixed with respect to the frame (1), the other (67, 74; 131) of which is provided on a detent (58, 59; 126) which is movable with respect to the frame (1).

Fig.1

1/4

0165629

FIG.2

Fig.3

Fig.4

Fig.5

3/4

0165629

FIG.6

FIG.7